# EUROPEAN PATENT APPLICATION

(11) **EP 4 717 531 A1**
(43) Date of publication of application: **01.04.2026**
(21) Application number: 24383028.8
(22) Date of filing: 25.09.2024
(51) Int. Cl.: B60S 1/40, B60S 1/52

(54) **WINDSCREEN WIPER DEVICE AND CORRESPONDING WIPER BLADE AND WIPER ARM**

(71) Applicant: Doga S.A., 08630 Abrera (ES)
(72) Inventor: García Chica, Juan José, 08630 Abrera (ES); Martí Jover, Alejandra, 08630 Abrera (ES)
(74) Representative: Curell Suñol S.L.P.

(57) **Abstract**

A windscreen wiper device (1) for wiping a windscreen surface comprising: a wiper blade (2), an oscillating wiper arm (4) and a connecting member (6), connected to said wiper blade (2). The wiper arm (4) comprises a first end (8), with a connecting section (10) removably connected to the wiper blade (2) through the connecting member (6). The connecting section (10) has two longitudinal first side walls (14) comprising first longitudinal projections (16a) protruding longitudinally in opposite directions. The connecting member (6) comprises longitudinal second side walls (20), comprising a recess (22) comprising second longitudinal projections (16b) protruding in opposite directions and said recess (22) of each of said second side walls (20) is shaped complementarily to said first side walls (14) of said connecting section (10).

## Description

### Field of the invention

The invention relates to a windscreen wiper device for wiping a windscreen surface comprising a wiper blade, an oscillating wiper arm and a connecting member, connected to said wiper blade, said wiper arm comprising a first end, with a connecting section extending in a longitudinal direction, said connecting section being removably connected to said wiper blade through said connecting member.

Furthermore, the invention relates to a wiper blade and a wiper arm for the windscreen wiper device of the invention.

### State of the art

Windscreen wiper devices comprising wiper blades connected to an oscillating wiper arm via a connecting member are widely known in the art for cleaning and wiping windscreens of all sorts of vehicles and machines, such as cars, trucks, cranes, excavators, trains or the like.

In particular, the wiper blade comprises a rubber blade body for wiping the surface of the windscreen to be wiped. This blade body wears off after several operation hours due to the friction between the rubber and the windscreen. Therefore, this part of the windscreen wiper device needs to be replaced often during the service life of the vehicle or the machine. To this end, the wiper blade is sold separately as a spare part and must be conceived to be easily replaced without any special technical skills, in other words it is desirable that the end user can replace the part without the need of a technician.

To this end in the art the assembly system between the wiper and the wiper blade has been improved continuously to make the assembly and replacement of the wiper blade easier.

For example, document FR2782043A discloses a windscreen wiper wherein a wiper blade is articulated at the longitudinal front end of a wiper arm, about a horizontal transverse axis, via a connector which is articulated on the blade. The connector comprises articulating means made by two parallel longitudinal flanks between which the wiper blade is housed. The connector articulation means co-operate with the wiper blade matching means. The connector flanks are housed in two lateral flanges of the end of the arm, and the connector comprises a retention resilient button, received in the slot of the arm to block the connector longitudinally relative to the arm. This coupling system is intended to make the replacement of the wiper blade easier. However, the upper position of the button makes the replacement difficult because the user needs to press the button downwards, e.g. against the windscreen, making it more difficult to separate the wiper blade from the wiper arm. By doing this, also the wiper blade can be damaged, and its wiping performance can be negatively affected.

### Summary of the invention

The object of the invention is to provide a blade for a windscreen wiper device for wiping a windscreen surface of the type indicated above, in which the wiper blade is easy to assemble and replace but which provides a reliable securing between the wiper arm and the wiper blade.

This purpose is achieved by a windscreen wiper of the type indicated at the beginning, characterized in that said connecting section has two longitudinal first side walls connected by a central wall, each of said first side walls comprising first longitudinal projections protruding longitudinally from the lower edge of said first side walls in opposite directions, said connecting member comprises longitudinal second side walls, which are at least partially resiliently movable between: an unlocking position in which said second side walls can be mutually compressed the one against the other and a locking position in which said second side walls are at rest, separated from one another, each of said second side walls of said connecting member comprises a recess comprising second longitudinal projections protruding in opposite directions and said recess of each of said second side walls is shaped complementarily to said first side walls of said connecting section and in that in said unlocking position said connecting section and said connecting member can be moved in the longitudinal direction relatively to one another for insertion or separation of said connecting section and said connecting member, and in said locking position said first side walls are received in said recess of each of said second side walls such that the engage in a positive fit engagement.

This solution has several advantages over the know prior art solution. The longitudinal second side walls, which are resiliently movable between the locking position in combination with the positive fit engagement of the first side walls of the connecting section of the wiper arm and the second side walls of the connecting member makes that to replace the wiper blade, if wanted or needed, the user only needs to press the second side walls of the connecting member with two fingers, and then the wiper blade can be easily disengaged and replaced. However, the retention of the wiper blade in the connecting section is very reliable in all directions.

In the invention, the distal longitudinal edges of the side walls of the connecting section in the area between the first longitudinal projections are straight, that is these walls are free of any protrusion transverse to the longitudinal direction, because the longitudinal protrusions and the coupling thereof in the recesses of the side walls of the connecting member provides the retention in a very efficient manner, which simultaneously makes the replacement of the wiper blade much easier.

The invention further includes a number of preferred features that are object of the dependent claims and the utility of which will be highlighted hereinafter in the detailed description of an embodiment of the invention.

There can be different solutions on how to resiliently deform the connecting member, such as using deformable materials or the like. However, in a preferred embodiment said second side walls are separated by at least one longitudinal deformation slot such that in said connecting member deformation arms are formed which are resiliently movable between said compressed position and said locking position.

The invention also seeks to solve the problem of facilitating an easy assembly of the wiper blade in the wiper arm. To this end the distal end of said deformation arms comprises an insertion chamfer to facilitate the insertion of said connecting member in said connecting section, and to make it more independent on the skills of the person replacing the wiper blade.

In another embodiment seeking for a robust and easy manufacturing process, but also having an appealing shape each of said first side walls comprising first longitudinal projections protruding longitudinally from the lower edge of said first side walls in opposite directions, and each of said second side walls of said connecting member comprising a recess comprising second longitudinal projections protruding in opposite directions and said recess shaped complementarily to said second side walls of said connecting section are shaped as an inverted T.

Also, to achieve an easier coupling of the wiper blade at least the distal longitudinal edges of said first and second longitudinal projections are rounded. This provides for an appealing and though soft coupling procedure between the first and second side walls.

This assembly process is further facilitated when the distal longitudinal edges of said first and second longitudinal projections are semicircular.

In a specially preferred embodiment, said inverted T shape of said first and second side walls is mirror symmetric.

As already indicated before, the wiper blade is a spare part, which needs to be replaced several times during the service life of the vehicle. It is thus important for the invention to have such a spare part as an independent part of the invention for solving the problem that the invention seeks to solve.

Therefore, the invention also provides a wiper blade for a windscreen wiper device for wiping a windscreen to be wiped, comprising a connecting member, connected to said wiper blade. In the wiper blade of the invention said connecting member comprises longitudinal second side walls, which are resiliently movable between: an unlocking position in which said second side walls can be mutually compressed the one against the other and a locking position in which said second side walls are at rest, separated from one another, each of said second side walls of said connecting member comprises a recess comprising second longitudinal projections protruding in opposite directions and said recess of each of said second side walls is shaped complementarily to first side walls of a connecting section of a wiper arm.

Also, within the context of the invention it can occur that only the wiper arm is damaged, and it must be replaced independently of the wiper blade.

To this end, the invention also provides a wiper arm for a windscreen wiper device, the wiper arm comprising at a first end, a connecting section extending in a longitudinal direction, said connecting section being removably connected to a wiper blade through a connecting member, connected to said wiper blade.

In the wiper arm of the invention, said connecting section has two longitudinal first side walls connected by a central wall, each of said first side walls comprising first longitudinal projections protruding longitudinally from the lower edge of said first side walls in opposite directions, and being configured to be received in a complementary recess comprising second longitudinal projections protruding in opposite directions and said recess of second side walls of said connecting member such that they engage in a positive fit engagement. This again facilitates an easy assembly of the wiper blade of the invention and though a reliable coupling between both parts.

In another embodiment, the wiper arm comprises a fluid nozzle cover defining an inner channel, said inner channel comprising holding means for holding a fluid nozzle and a fluid duct connected to said nozzle for projecting fluid through said nozzle on a windscreen surface, a first side wall of said connecting section comprises at least one first through hole, and said fluid nozzle cover comprises a second through hole connected with said connecting section such that said fluid duct is guided through said first and second through holes and said connecting section. Thanks to this configuration, the whole liquid spraying device of the wiper arm can be hidden providing a more aerodynamic wiper arm.

To improve the washing performance of the device of the invention the fluid nozzle comprises at least two main fluid outlets, said at least two main fluid outlets pointing in different directions, and preferably in diametrically opposite directions.

More preferably the fluid nozzle further comprises at least one secondary fluid outlet, said secondary fluid outlet being arranged between said at least two main fluid outlets pointing in different directions. This allows a higher fluid volumes to be distributed along the wiper blade.

Preferably, said at least two fluid outlets and said at least one secondary fluid outlet are pivoting and orientable. This provides for a better fluid distribution adaption to the geometry of the windshield.

In another embodiment, said cover further comprises a first hook at the longitudinal front side thereof and at least a second resilient hook at the longitudinal back side thereof, and in that said first hook is retained at the front edge of said connecting section and said second resilient hook is resiliently retained at said through hole. This provides a very reliable fixation between the cover and the wiper arm without requiring additional fixing means such as screws or the like.

Preferably, said connecting section is shaped as an inverted U for having an easier tooling.

Preferably said two longitudinal first side walls are parallel to each other, allowing a better holding of the wiper arm and wiper blade to one another.

Preferably said connecting member is made of a polymeric material, such as for example polyamides such as PA6, PA66 and more preferably reinforced with glass or carbon fibre in an w/w proportion of at least 10%.

Preferably said connecting section is made of a polymeric material or of a metal sheet.

Likewise, the invention also includes other features of detail illustrated in the detailed description of an embodiment of the invention and in the accompanying figures.

### Brief description of the drawings

Further advantages and features of the invention will become apparent from the following description, in which, without any limiting character, preferred embodiments of the invention are disclosed, with reference to the accompanying drawings in which:
Figure 1 shows an isometric view of the windscreen wiper device of the invention.
Figure 2 shows a detailed isometric bottom view of the area of the fluid nozzle of the windscreen wiper device of the invention.
Figure 3 shows a detailed isometric top view of the area of the fluid nozzle of the windscreen wiper device of the invention.
Figure 4 shows an isometric view of the windscreen wiper device of figure 1 before the assembly between the wiper arm and the wiper blade.
Figure 5 shows an isometric view of the windscreen wiper device during the assembly between the wiper arm and the wiper blade, when both parts are aligned for insertion of the connecting member in the connecting section of the wiper arm.
Figure 6 shows an isometric view of the windscreen wiper device once the assembly between the wiper arm and the wiper blade is completed, with the connecting member fully inserted in the connecting section of the wiper arm.
Figure 7 shows an exploded isometric view of the wiper arm of figure 1.
Figure 8 shows an isometric view of the wiper arm of the invention with a detail of the fluid nozzle seen from the bottom.
Figure 9 shows an isometric view of the wiper arm of the invention with a detail of the fluid nozzle seen from the bottom.
Figure 10 shows an isometric view of the inside of the wiper blade of the wiper device of Figure 1 at the internal area of the connecting member.
Figure 11 shows an isometric section view of the coupling area between the wiper blade and the connecting member of the wiper device of Figure 1.
Figure 12 shows an isometric section view of the coupling area between the wiper blade and the connecting section of the wiper device Figure 1.
Figure 13 shows an isometric section view of the coupling front area between the washer fluid nozzle cover and the connecting section of the wiper device of Figure 1.
Figure 14 shows an isometric detailed view of the cover for the nozzle of the wiper are of figure 1.
Figures 15 and 16 show isometric views of the connecting member of the wiper arm of figure 1, to show the assembly procedure of the fluid nozzle cover.
Figures 17 and 18 show isometric views of the connecting member of the wiper arm of figure 1, to show the assembly procedure of the washer fluid nozzle.
Figures 19 to 21 shows an isometric view of a second embodiment of the wiper device of the invention.
Figures 22 to 24 shows an isometric view of a third embodiment of the wiper device of the invention.
Figures 25 to 27 shows an isometric view of a fourth embodiment of the wiper device of the invention.

### Detailed description of embodiments of the invention

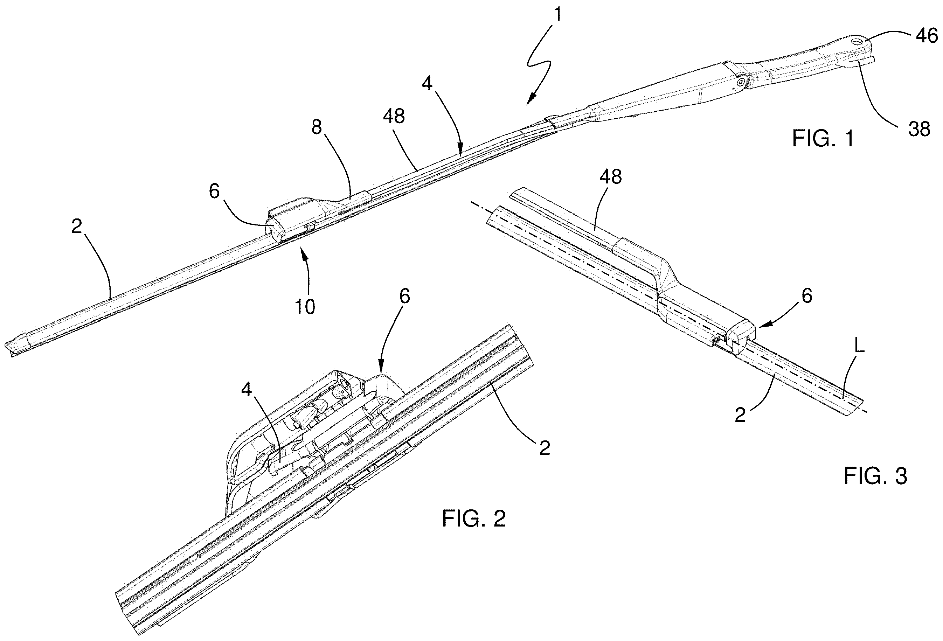

Figures 1 to 18 show a first embodiment of the windscreen wiper device 1 of the invention, and the corresponding wiper arm and wiper blade.

As it is apparent from figure 1, the windscreen wiper device 1 for wiping a windscreen surface (not shown) comprises a wiper blade 2 and an oscillating wiper arm 4. Further, a connecting member 6, is connected to the wiper blade 2.

The wiper arm 4 comprises a first end 8 to the side of the wiper blade 2 and a second end 46 coupled to an axle driven by a wiper motor, not shown in detail but known in the art and by the skilled person.

The first end 8 has a connecting section 10 extending in a longitudinal direction L. This connecting section 10 is connectable to the wiper blade 2 through the connecting member 6. As it is apparent from the figures the wiper arm 4 comprises a solid rod 48 made of metal, forming the main part of the wiper arm 4, while the connecting section 10 is a sheet metal part correspondingly formed to receive the wiper blade 2, via the connecting member 6 and a connecting member clamp 54.

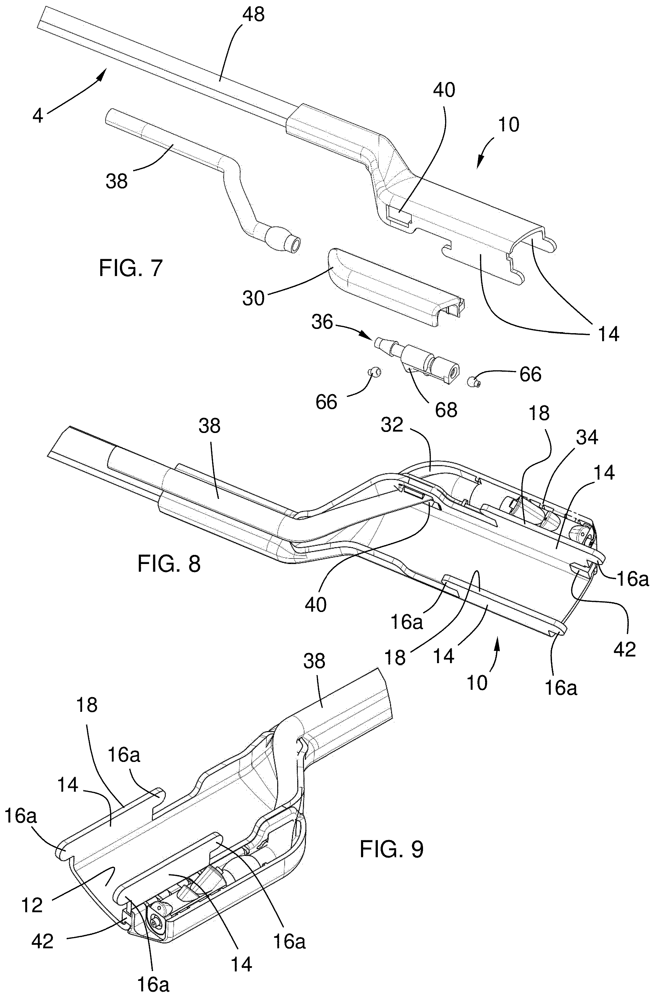

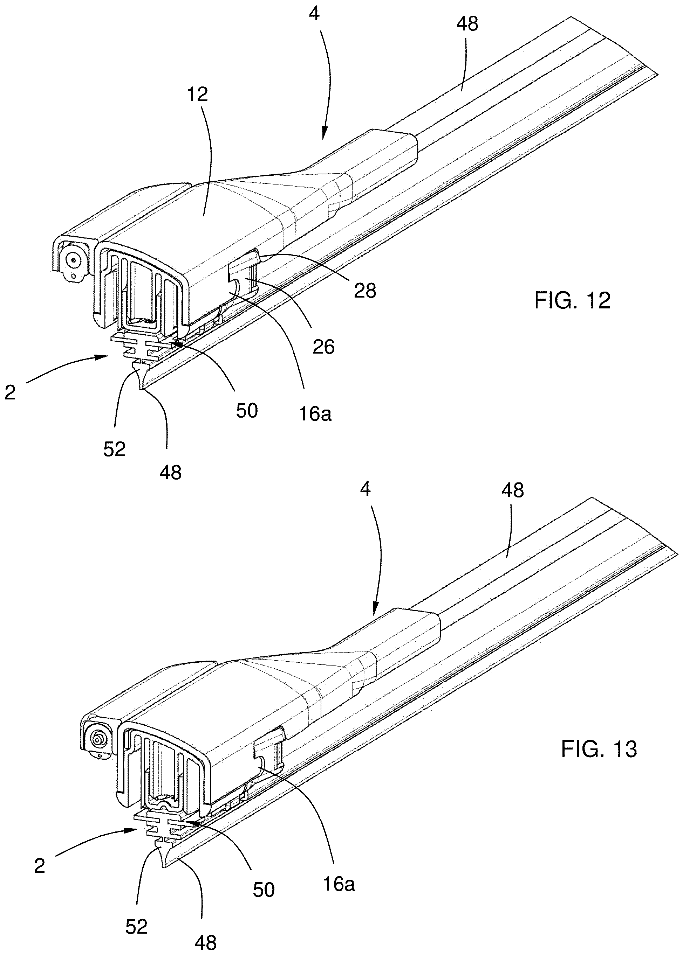

In particular, to achieve a wiper device 1 in which the wiper blade 2 is easy to assemble and replace, but which provides a reliable securing between the wiper arm 4 and the wiper blade 2, as shown in figures 9 or 12, in the invention it is provided that the connecting section 10 has two longitudinal first side walls 14 connected by a central wall 12. Each of the first side walls 14 comprises first longitudinal projections 16a protruding longitudinally from the lower edge 18 of the first side walls 14 in opposite directions of the longitudinal direction L. Preferably the first side walls 14 are perpendicular to the central wall 12.

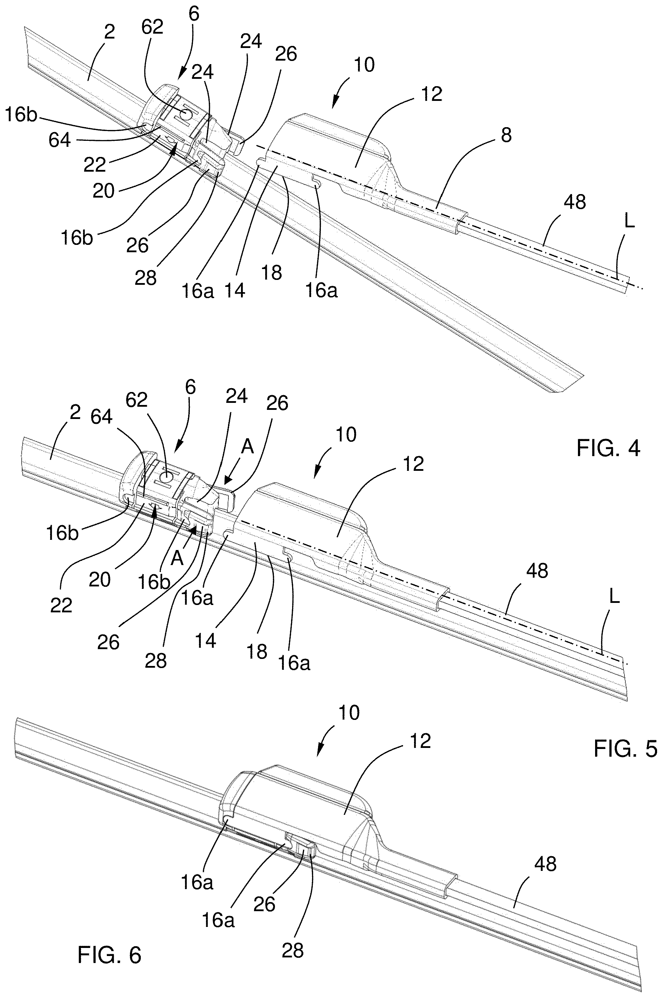

Further, the connecting member 6 has a substantially parallelepipedal shape and comprises longitudinal second side walls 20, shown in detail in figures 4 and 5 and an upper central wall 62. These second side walls 20 are, at least partially, resiliently movable between an unlocking position in which, at least partially, the second side walls 20 can be mutually compressed the one against the other when they are compressed in the direction of the arrows A-A in figure 5, and a locking position, shown in figures 4 to 6 in which the second side walls 20 are at rest, separated from one another.

Further to solve the above problem, each of the second side walls 20 of the connecting member 6 comprises a recess 22 comprising second longitudinal projections 16b protruding in opposite directions. The recess 22 of each of the second side walls 20 is shaped complementarily to the first side walls 14 of the connecting section 10. More particularly, each of the first side walls 14 comprises first longitudinal projections 16a protruding longitudinally from the lower edge 18 of the first side walls 14 in opposite directions, and each of the second side walls 20 of the connecting member 6 comprises a recess 22 comprising second longitudinal projections 16b protruding in opposite directions. The recess 22 is further shaped complementarily to the second side walls 20 of the connecting section 10 and is shaped as an inverted T. This does not mean that the whole recess 22 has to be coplanar with the longitudinal projections 16b. Indeed, in this embodiment the second side walls 20 comprises a protruding rib 64, protruding from the recess 22 having a distal surface flush with the second longitudinal projections 16b. Furthermore, to facilitate the engagement the distal longitudinal edges of the first and second longitudinal projections 16a, 16b are rounded and they are semicircular. Altogether, the inverted T shape of said first and second side walls 14, 20 is preferably mirror symmetric. This shape of the inverted T with rounded edges results from a design choice made considering primary aesthetic, not technical, criteria. Other many different shapes such as, for example, rectangles, triangles with rounded edges or the like could be possible alternatives for the first and second longitudinal projections 16a, 16b. All these alternatives were taken into consideration among other possible designs. However, all these alternatives were less appealing for the designer.

Furthermore, as it is apparent from figures 4 to 6, in the device 1 of the invention, in said unlocking position, the connecting section 10 and the connecting member 6 can be moved in the longitudinal direction relatively to one another for insertion or separation of the connecting section 10 and the connecting member 6, and in the locking position the first side walls 14 are received in the recess 22 of each of the second side walls 20 such that they engage in a positive fit engagement. Figure 6 shows how the first longitudinal projections 16a of the first side walls 14 are snuggly engaged in the corresponding recesses 22, with their second longitudinal projections 16b.

In a specially preferred manner, for the second side walls 20 to resiliently move between the unlocking position and the locking position, it is provided that the second side walls 20 are separated by at least one longitudinal deformation slot 24 such that in the connecting member deformation arms 26 are formed which are resiliently movable between the compressed position and the locking position.

Based on figures 4 to 6 the assembly of the wiper blade 2 in the wiper arm 4 is explained in further detail. The wiper arm 4 is put closer to the connecting member 6, as shown in figure 4. Next the connecting section 10 is preferably aligned along the longitudinal direction L with the connecting member 6, with its deformation arms 26 facing the connecting section, as shown in figure 5. From this point, there are two assembly possibilities.

First the deformation arms 26 can be compressed in the direction of arrows A-A until the overall width of connecting member 6 is smaller than the separation of the inner surfaces of first side walls 14, such as so allow the insertion of the connecting section 10 in the connecting member 6. Finally, the connecting member 6 is inserted in the connecting section 10 of the wiper arm 4, until the forward first longitudinal projections 16a abut the second longitudinal projections 16b of the recesses 22. When the first longitudinal projections 16a arrive at this point, the deformation arms 26 can be liberated and they can resiliently move back to the locking position, as shown in figure 6.

Alternatively, the distal end of the deformation arms 26 comprises an insertion chamfer 28 to facilitate the insertion of the connecting member 6 in said connecting section 10. In this case, no hands are needed to compress the deformation arms 26.

When the wiper blade 2 must be replaced, the operation above must be reversed. In other words, the deformation arms 26 must be resiliently moved to the compressed position, to allow the separation of the connecting member 6 of the wiper blade 2 from the connecting section 10 of the wiper arm 4 by pulling both parts from one another.

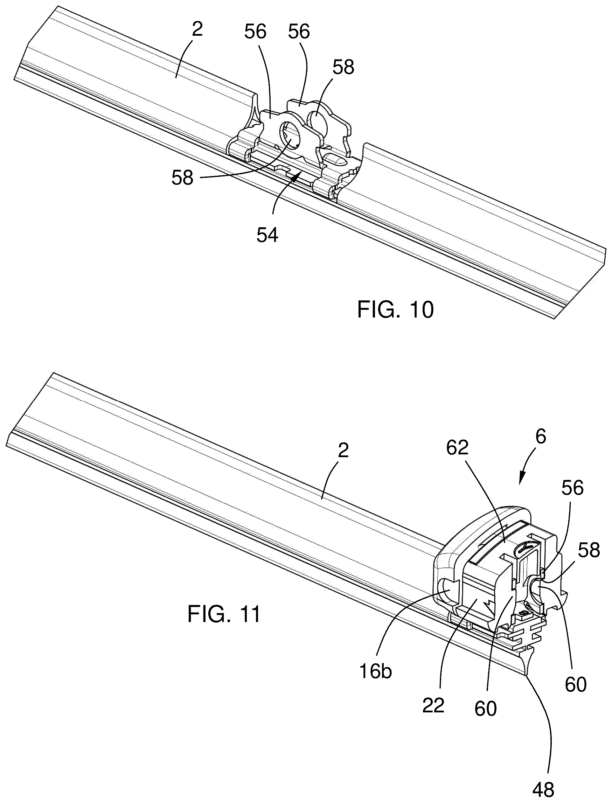

Figures 10 to 13 show in further detail the wiper blade 2 for a windscreen wiper device 1 of the invention, which can be sold separately from the whole assembly.

The wiper blade 2 extends longitudinally and the wiping part thereof is manufactured from an elastic material, such as, for example vulcanized rubber with a metallic blade body 50. In its assembled state, the metallic blade body 50 has one face facing the windscreen and another face looking away from same. A substantially triangular-shaped wiping projection 52 protrudes from the face of the metallic blade body 50 facing the windscreen for wiping the windscreen surface through the lip 48 for wiping the windscreen.

The connecting member 6 is pivotably connected to blade body 50 via a connecting member clamp 54. The latter has two facing pivot flaps 56 with two opposite coaxial pivoting bores 58 defining a pivoting axis. The connecting member 6 comprises two cylindrical hubs 60 protruding internally towards the pivoting bores 58, which are correspondingly inserted each in one of the pivoting bores 58. This allows the free pivoting movement of the wiper blade 2 relative to the wiper arm 4 for better adaption of the wiper blade 2 to the surface of the windscreen in any position during the wiping movement.

As already explained above, the connecting member 6 comprises longitudinal second side walls 20, which are resiliently movable between an unlocking position in which the second side walls 20 can be mutually compressed the one against the other and a locking position in which the second side walls 20 are at rest, separated from one another.

Each of the second side walls 20 of the connecting member 6 comprises a recess 22 comprising second longitudinal projections 16b protruding in opposite directions and the recess 22 of each of the second side walls 20 is shaped complementarily to first side walls 20 of a connecting section 10 of the wiper arm 4, further explained below.

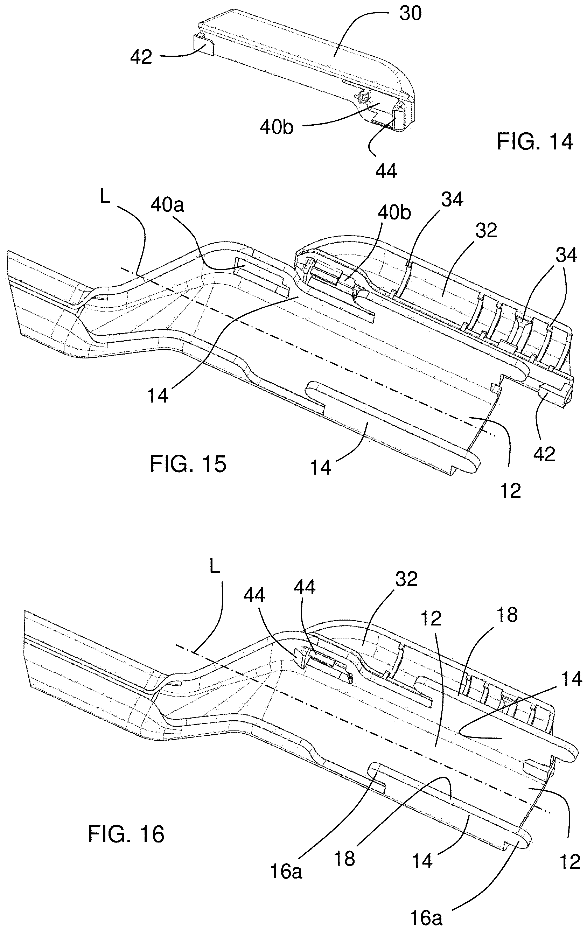

Figures 14 to 18 show further details of the wiper arm 4 of the invention, as well as the connecting section 10 thereof.

The wiper arm 4 comprises at a first end 8, a connecting section 10 extending in a longitudinal direction L. The connecting section 10 is connectable to a wiper blade 2 through a connecting member 6, connected to said wiper blade 2, and already described in the previous paragraphs.

The connecting section 10 has two longitudinal first side walls 14 connected by a central wall 12, each of the first side walls 14 comprising first longitudinal projections 16a protruding longitudinally from the lower edge 18 of the first side walls 14 in opposite directions. These first longitudinal projections 16a are configured to be received in a complementary recess 22 comprising second longitudinal projections 16b protruding in opposite directions and the recess 22 of the second side walls 20 of the connecting member 6 such that they engage in a positive fit engagement.

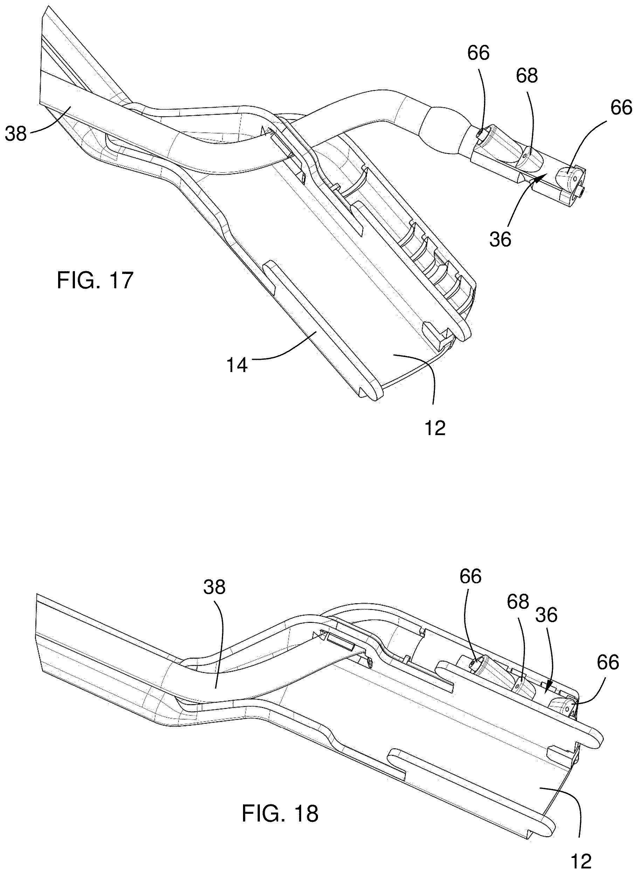

The wiper arm 4 of this embodiment, has also the object of providing a wiper device 1 which improves the washing capacity of the wiper device 1. To this end, the wiper arm 4 further comprises an integrated fluid nozzle cover 30 defining an inner channel 32, as shown in detail in figures 14 and 18. This inner channel 32 comprises holding means 34 for holding a fluid nozzle 36. This holding means 34 are a plurality of circular ribs adapted to receive a fluid duct 38 and a nozzle 36 in a snuggly manner, preferably in a positive fit engagement. This fluid duct 38 is connected to the nozzle 36 for projecting fluid therethrough on a windscreen surface, not shown. The fluid nozzle 36 comprises in this case three fluid outlets. Two main fluid outlets 66 are pointing in different directions, and preferably in diametrically opposite directions, while a secondary fluid outlet 68 is arranged between the main fluid outlets 66. In this embodiment, only the main fluid outlets 66 are orientable. In an alternative embodiment both the main and the secondary fluid outlets 66, 68 could be orientable. Furthermore, in other embodiment several secondary fluid outlets 68 can be arranged between the fluid outlets 66.

Thanks to this arrangement the wiper has a much better washing capacity. In this arrangement, the washing fluid, i.e. preferably water or a similar fluid, preferably with some solvent diluted therein, is sprayed near to the wiper blade 2. Furthermore, the fluid nozzle 36 moves together with the wiper blade 2, thus maximizing the wetting capacity of the wiper device 1.

Also to hide all the fluid spraying equipment, a first side wall 14 of the connecting section 10 comprises at least one first through hole 40a, and the fluid nozzle cover 30 comprises a second through hole 40b connected with the connecting section 10 such that said fluid duct 38 is guided through said first and second through holes 40a, 40b and the connecting section 10.

Finally, to guarantee a good holding of the fluid spraying equipment, the cover 30 further comprises a first hook 42 at the longitudinal front side thereof and two second resilient hook 44 at the longitudinal back side thereof. More particular, in this embodiment, the first hook 42 is retained at the front edge of the connecting section 10. Then the two second resilient hooks 44 are resiliently retained at the through hole 40, thus providing a strong fixation of the nozzle cover 30 and therefore of fluid spraying equipment.

Further embodiments of the wiper device 1 according to the invention are shown below, sharing many of the features described in the preceding paragraphs. Therefore, hereinafter only the distinguishing elements over the already described embodiment will be explained, while for the common elements, reference is made to the description of the first embodiment.

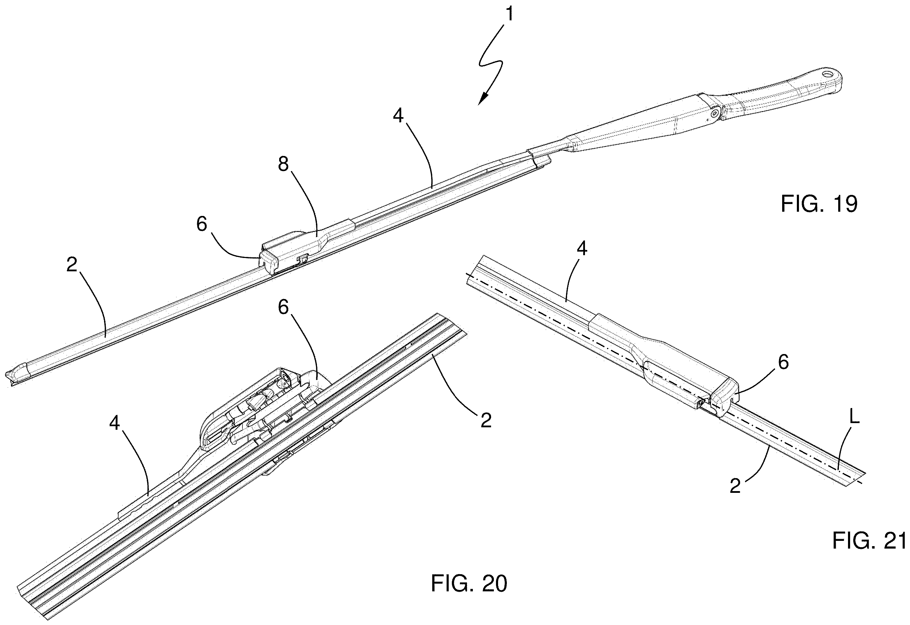

The second embodiment of the diagrammatical figures 19 to 21 differs from the first embodiment, in that the connecting section 10 of the wiper arm is completely straight. In this case, the windscreen wiper device 1 also includes a fluid spraying equipment.

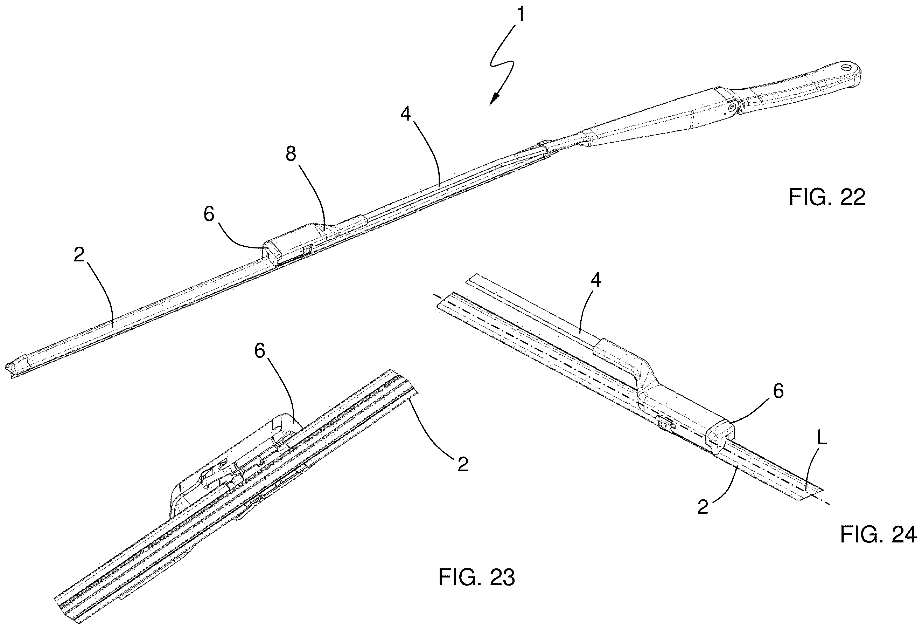

The third embodiment of figures 22 to 24 differs from the first embodiment, in that the connecting section 10 of the wiper arm 4 does not have a spraying equipment integrated in the wiper arm 4.

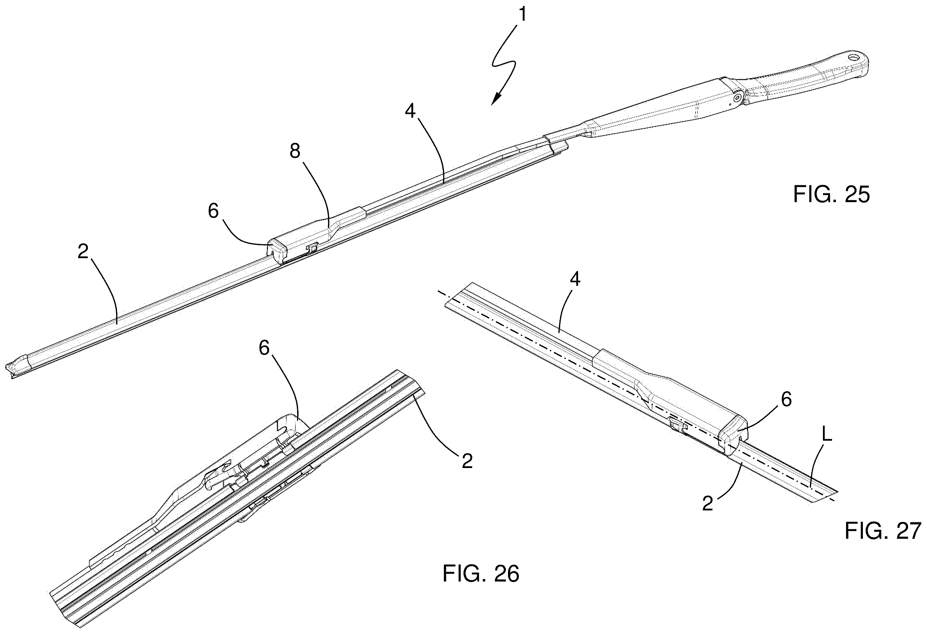

Finally, the fourth embodiment of figures 25 to 27 corresponds to the same embodiment of figures 19 to 21, but in this case the connecting section 10 does not have a spraying equipment integrated therein.

## Claims

1. A windscreen wiper device (1) for wiping a windscreen surface comprising:
[a] a wiper blade (2),
[b] an oscillating wiper arm (4) and
[c] a connecting member (6), connected to said wiper blade (2),
[d] said wiper arm (4) comprising a first end (8), with a connecting section (10) extending in a longitudinal direction (L),
[e] said connecting section (10) being removably connected to said wiper blade (2) through said connecting member (6),
**characterized in that**
[f] said connecting section (10) has two longitudinal first side walls (14) connected by a central wall (12), each of said first side walls (14) comprising first longitudinal projections (16a) protruding longitudinally from the lower edge (18) of said first side walls (14) in opposite directions,
[g] said connecting member (6) comprises longitudinal second side walls (20), which are at least partially resiliently movable between:
[i] an unlocking position in which said second side walls (20) can be mutually compressed the one against the other and
[ii] a locking position in which said second side walls (20) are at rest, separated from one another,
[h] each of said second side walls (20) of said connecting member (6) comprises a recess (22) comprising second longitudinal projections (16b) protruding in opposite directions and said recess (22) of each of said second side walls (20) is shaped complementarily to said first side walls (14) of said connecting section (10) and **in that**
[i] in said unlocking position said connecting section (10) and said connecting member (6) can be moved in the longitudinal direction relatively to one another for insertion or separation of said connecting section (10) and said connecting member (6), and
[ii] in said locking position said first side walls (14) are received in said recess (22) of each of said second side walls (20) such that they engage in a positive fit engagement.

2. The wiper device (1) according to claim 1, **characterized in that** said second side walls (20) are separated by at least one longitudinal deformation slot (24) such that in said connecting member deformation arms (26) are formed which are resiliently movable between
[i] said compressed position and
[ii] said locking position.

3. The wiper device (1) according to claim 2, **characterized in that** the distal end of said deformation arms (26) comprises an insertion chamfer (28) to facilitate the insertion of said connecting member (6) in said connecting section (10).

4. The wiper device (1) according to any of claims 1 to 3, **characterized in that** each of said first side walls (14) comprising first longitudinal projections (16a) protruding longitudinally from the lower edge (18) of said first side walls (14) in opposite directions, and each of said second side walls (20) of said connecting member (6) comprising a recess (22) comprising second longitudinal projections (16b) protruding in opposite directions and said recess (22) shaped complementarily to said second side walls (20) of said connecting section (10) are shaped as an inverted T.

5. The wiper device (1) according to any of claims 1 to 4, **characterized in that** at least the distal longitudinal edges of said first and second longitudinal projections (16a, 16b) are rounded.

6. The wiper device (1) according to claim 5, **characterized in that** the distal longitudinal edges of said first and second longitudinal projections (16a, 16b) are semicircular.

7. The wiper device (1) according to any of claims 4 to 6, **characterized in that** said inverted T shape of said first and second side walls (14, 20) is mirror symmetric.

8. A wiper blade (2) for a windscreen wiper device (1) for wiping a windscreen to be wiped, comprising
[a] a connecting member (6), connected to said wiper blade (2),
**characterized in that**
[b] said connecting member (6) comprises longitudinal second side walls (20), which are resiliently movable between:
[i] an unlocking position in which said second side walls (20) can be mutually compressed the one against the other and
[ii] a locking position in which said second side walls are at rest, separated from one another,
[c] each of said second side walls (20) of said connecting member (6) comprises a recess (22) comprising second longitudinal projections (16b) protruding in opposite directions and said recess (22) of each of said second side walls (20) is shaped complementarily to first side walls (20) of a connecting section (10) of a wiper arm (4).

9. A wiper arm (4) for a windscreen wiper device (1), the wiper arm (4) comprising at a first end (8), a connecting section (10) extending in a longitudinal direction (L),
[a] said connecting section (10) being removably connected to a wiper blade (2) through a connecting member (6), connected to said wiper blade (2),
**characterized in that**
[b] said connecting section (10) has two longitudinal first side walls (14) connected by a central wall (12), each of said first side walls (14) comprising first longitudinal projections (16a) protruding longitudinally from the lower edge (18) of said first side walls (14) in opposite directions, and being configured to be received in a complementary recess (22) comprising second longitudinal projections (16b) protruding in opposite directions and said recess (22) of second side walls (20) of said connecting member (6) such that they engage in a positive fit engagement.

10. The wiper arm of claim 9, **characterized in that** it comprises a fluid nozzle cover (30) defining an inner channel (32), said inner channel (32) comprising holding means (34) for holding a fluid nozzle (36) and a fluid duct (38) connected to said nozzle (36) for projecting fluid through said nozzle (36) on a windscreen surface, **in that** a first side wall (14) of said connecting section (10) comprises at least one first through hole (40a), and **in that** said fluid nozzle cover (30) comprises a second through hole (40b) connected with said connecting section (10) such that said fluid duct (38) is guided through said first and second through holes (40a, 40b) and said connecting section (10).

11. The wiper arm of claim 10, **characterized in that** said fluid nozzle (36) comprises at least two main fluid outlets (66), said at least two main fluid outlets (66) pointing in different directions, and preferably in diametrically opposite directions.

12. The wiper arm of claim 11, **characterized in that** said fluid nozzle (36) further comprises at least one secondary fluid outlet (68), said secondary fluid outlet (68) being arranged between said at least two main fluid outlets (66).

13. The wiper arm of claim 11 or 12, **characterized in that** said at least two main fluid outlets (66) and said at least one secondary fluid outlet (68) are pivoting and orientable.

14. The wiper arm of claim 10 to 13, **characterized in that** said cover (30) further comprises a first hook (42) at the longitudinal front side thereof and at least a second resilient hook (44) at the longitudinal back side thereof, and **in that** said first hook (42) is retained at the front edge of said connecting section (10) and said second resilient hook (44) is resiliently retained at said through hole (40).
